# EUROPÄISCHE PATENTSCHRIFT

(11) **EP 3 707 386 B1**
(45) Veröffentlichungstag und Bekanntmachung des Hinweises auf die Patenterteilung: **30.10.2024**
(21) Anmeldenummer: 19708087.2
(22) Anmeldetag: 26.02.2019
(51) Int. Cl.: F04D 25/06, F04D 25/08, F04D 27/00

(54) **PARAMETERKONSTANZ**
PARAMETER CONSTANCY
STABILITÉ DES PARAMÈTRES

(30) Priorität: 27.02.2018 DE 102018104396
(43) Veröffentlichungstag der Anmeldung: 16.09.2020
(73) Patentinhaber: ebm-papst Mulfingen GmbH & Co. KG, 74673 Mulfingen (DE)
(72) Erfinder: GÖTZINGER, Marvin, 74522 Buchen-Götzingen (DE)
(74) Vertreter: Staeger & Sperling Partnerschaftsgesellschaft mbB
(86) Internationale Anmeldenummer: PCT/EP2019/054770
(87) Internationale Veröffentlichungsnummer: WO 2019/166449

(56) Entgegenhaltungen:
- EP-A2- 1 990 584
- DE-A1- 10 035 829
- US-A1- 2016 281 723
- US-A1- 2017 350 404

## Beschreibung

Die Erfindung betrifft ein Verfahren zur Regelung von strömungstechnischen Parametern anhand von Motorparametern eines Ventilators. Die Erfindung betrifft insbesondere ein Verfahren zur Regelung von strömungstechnischen Parametern eines Ventilators bei dem keine eindeutige Zuordnung zwischen der Drehzahl, der Leistung und dem Volumenstrom des Ventilators möglich ist.

In vielen Anwendungsfällen ist es erforderlich, dass der eingebaute Ventilator die vorgegebene Luftleistung genau erreicht - und das unabhängig von sich ändernden äußeren und inneren Einflüssen über die gesamte Nutzungsdauer des Gerätes.

Dazu gibt es zahlreiche Beispiele: Bei Wohnungslüftungsgeräten funktioniert der Optimale Wärmeaustausch nur, wenn die Zu- und Abluftströme dem eingestellten Wert entsprechen. Ventilatoreinheiten für Reinräume gewährleisten nur dann einen definierten Strömungszustand im Raum, wenn der Volumenstrom auf den geforderten Wert geregelt wird. Aus Sicherheitsgründen muss für einen Laborschrank der Überdruck unabhängig von Leckageströmen konstant gehalten werden.

In der Praxis treten vor allem zwei relevante Effekte auf. Zum einen kann sich der Arbeitspunkt zeitlich ändern, z.B. durch sich mit Schmutz zusetzende Filter, durch wechselnde Windbeaufschlagungen oder sich ändernde thermische Auftriebskräfte an Hochhäusern. Zum andern ergeben sich einbauabhängig verschieden große externe Widerstände, z.B. durch den Anschluss an unterschiedlich ausgeführte Rohrleitungssysteme oder durch Versperrungen im Ansaug- oder Ausblasbereich des Gerätes.

Ein Aspekt der Erfindung liegt darin, eine universelle Lösung für unterschiedliche Ventilatorbauarten vorzusehen, wobei aus dem Zusammenspiel von Motorparametern und einer vorgegebenen spezifischen Regelungssystematik die Regelung von strömungstechnischen Parametern vorgenommen wird.

Die sogenannte Ventilatorkennlinie stellt die gegenseitige Abhängigkeit von Volumenstrom und Druckerhöhung dar. Der Verlauf der Ventilatorkennlinie hängt von der Bauart des Ventilators ab. Die Ventilatorkennlinien werden typischerweise an einem dazu geeigneten Ventilatorprüfstand gemessen und erfasst. Zu beachten ist allerdings, dass die Kennlinien typischerweise unter Idealbedingungen an einzelnen freistehenden repräsentativen Lüftern einer Ventilatorbaureihe mit ungehinderter Strömung gemessen wurden. Die realen Kennlinien unter Einbaubedingungen können davon abweichen. Der Arbeitspunkt eines Ventilators, ergibt sich als Schnittpunkt von Ventilator- und Anlagenkennlinie.

Der tatsächliche Volumenstrom durch die Anlage ist daher durch den Arbeitspunkt bestimmt. Ein konstanter Volumenstrom ist nicht ohne weiteres darstellbar. Abhängig von den jeweiligen Bedingungen vor Ort variiert der Gegendruck und damit der zur Verfügung stehende Volumenstrom sehr stark.

Aus der EP 2 508 811 B1 ist eine Vorrichtung zur Ermittlung des von einem Ventilator transportierten Volumenstroms bekannt, die im Bereich einer Einlaufdüse des Ventilators vorgesehen ist sowie einem Druckdifferenzsensor zur Verbindung einer Messöffnung mit einem Referenzrohr.

Es gibt bereits Gebläse mit sensorloser Regelung, die speziell für Wohnungslüftungsgeräte entwickelt wurden. Wie bereits beschrieben, ist es besonders wichtig, die eingestellten Volumenströme unabhängig von der Filterverschmutzung und den angeschlossenen Rohrkanälen konstant zu halten. Der Ansatz ohne zusätzliche Sensoren, der dafür verwendet wird, stützt sich nur auf Informationen der Motorbelastung, die entweder vorliegen oder mit wenig Zusatzaufwand bestimmt werden können. Auf die Information eines Strömungssensors kann nach der Idee der vorliegenden Erfindung komplett verzichtet werden. Um diesen Ansatz realisieren zu können, muss ein eindeutiger Zusammenhang zwischen der Motorbelastung und der Luftleistung des Ventilators ("stetig monotone Kennlinie") vorliegen. Diese Anforderung wird nicht von allen Ventilatortypen erfüllt, trifft aber z.B. auf Gebläse mit vorwärts gekrümmten Radialrädern zu. Hier lässt sich aus der Drehzahl und dem Motorstrom der aktuelle Arbeitspunkt bestimmen. Dazu werden Näherungsfunktionen genutzt, deren Koeffizienten vorab aus Luftleistungs- und Motormessungen ermittelt und in einem Mikrocontroller hinterlegt wurden.

Der auf der Kommutierungselektronik des Lüfters implementierte Regler vergleicht die berechneten Istwerte mit den vorgegebenen Sollwerten, und regelt entsprechend nach.

Druckschriftlicher Stand der Technik im vorliegenden technischen Gebiet, welcher den Oberbegriff des Anspruchs 1 widerspiegelt, ist in den Dokumenten US 2017/350 404 A1, EP 1 990 584 A2, DE 100 35 829 A1 und US 2016/281 723 A1 offenbart.

Der Erfindung liegt deshalb die Aufgabe zugrunde, ein universell anwendbares Regelungsverfahren zur Regelung von strömungstechnischen Parametern eines Ventilators insbesondere ein Regelungsverfahren zur Regelung von strömungstechnischen Parametern eines Ventilators bei dem keine eindeutige Zuordnung zwischen der Drehzahl, der Leistung und dem Volumenstrom des Ventilators möglich ist, vorzusehen.

Diese Aufgabe wird durch die Merkmalskombination gemäß Anspruch 1 gelöst.

Ein Grundgedanke der Erfindung liegt darin, eine universelle Lösung für unterschiedliche Ventilatorbauarten vorzusehen, wobei aus dem Zusammenspiel von Motorparametern und einer vorgegebenen spezifischen Regelungssystematik die Regelung mindestens eines strömungstechnischen Parameters vorgenommen wird.

Erfindungsgemäß wird daher ein Verfahren zur Regelung eines Ventilators in einer Anlage von mindestens einem strömungstechnischen Parameter P_{i,ist} auf einen vorgegebenen Sollwert P_{i,soll} (z.B. qvₛₒₗₗ) durch mindestens einen Motorparameter Mi beschrieben. Dieser Sollwert wird zu Beginn des Verfahrens und vom Anwender festgelegt und kann während des Verfahrens vom Anwender verändert werden. Zu Beginn der Regelung befindet sich der Ventilator im Betrieb und der Arbeitspunkt des Ventilators ist bekannt. Der Ventilator wird mit einem auf einen konstanten Wert geregelten Motorparameter Mi (z. B. Pe) betrieben. Zunächst werden Ist-Werte von den Motorparametern Mi (z.B. Pe, n, I) erfasst und Ist-Werte von strömungstechnischen Parametern P_{i,ist} (z.B. pᵢₛₜ, qvist) vorzugsweise mit einem im Ventilator hinterlegten gemessenen Ventilatorkennfeld bestimmt und mit den Soll-Werten P_{i,soll} verglichen. Entsprechen die Ist-Werte den Soll-Werten der strömungstechnischen Parameter, so regelt der Ventilator nicht und wird weiterhin mit auf einen konstanten Wert geregelten Motorparameter Mi (beispielsweise Pe) betrieben. Es findet erneut ein Abgleich der Parameter statt bis sich eine Änderung der Motorparameter detektieren lässt.

Bei einer Änderung des Arbeitspunktes und damit einer Änderung mindestens eines Motorparameters wird ermittelt, ob sich eine Abweichung mindestens eines strömungstechnischen Parameters über den Knickbetriebspunkt hinaus ergibt.

Erfindungsgemäß wird für den Fall, dass der strömungstechnische Parameter den Knickarbeitspunkt nicht überschreitet, der konstante Wert des Motorparameters über eine Drehzahländerung so geändert, dass der Ist-Wert des strömungstechnischen Parameters auf dessen Sollwert geregelt wird, ohne dass ein Wechsel des Motorparameters Mi stattfindet.

Für den Fall, dass der strömungstechnische Parameter den Knickbetriebspunkt überschreitet, wechselt der auf einen konstanten Wert geregelte Motorparameter Mi (z.B. von Pe auf n) und der konstante Wert des Motorparameters Mi über eine Drehzahländerung wird so geändert, dass der Ist-Wert des strömungstechnischen Parameters auf dessen Sollwert geregelt wird. Die notwendige Drehzahländerung wird aus dem gemessenen strömungstechnischen und motortechnischen Parameterkennfeld des Ventilators bestimmt welches im Vorfeld im Ventilator hinterlegt wurde. Die Drehzahländerung kann beispielsweise über einen Abgleich der aufgenommenen strömungstechnischen Parametern und Motorparametern erfolgen oder durch eine Interpolation der im Parameterkennfeld hinterlegten Werte bestimmt werden. Außerdem kann die Drehzahländerung mittels einschlägiger Ventilatorgesetze ermittelt werden.

Eine besonders bevorzugte Ausführung der Erfindung sieht vor, dass der zu regelnde Parameter der Volumenstrom oder der Druck ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

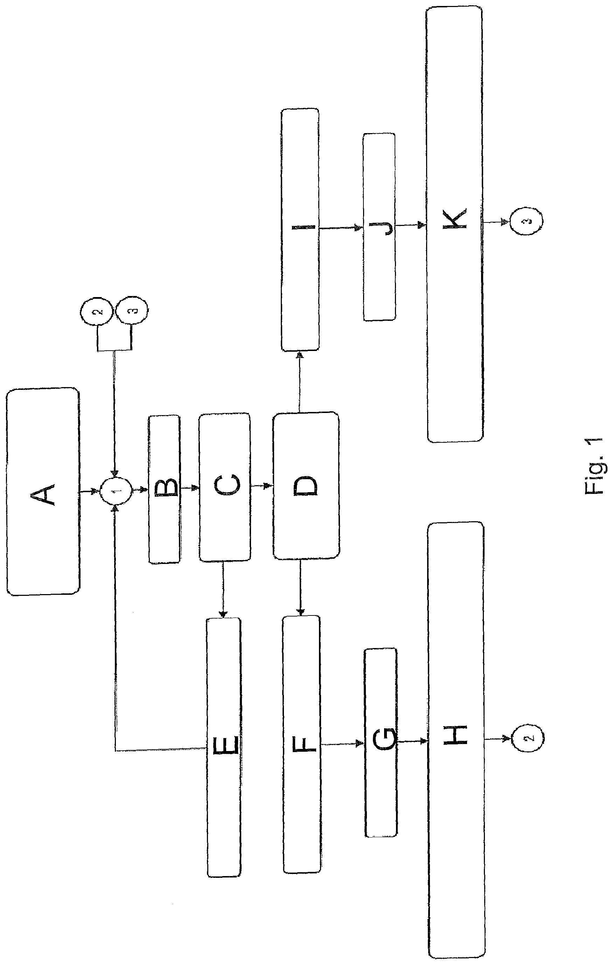

- Fig. 1 ein des: Flußdiagramm zur Darstellung eines des Prozessablaufs Regelungsverfahrens mit den folgenden Schritten:
A Ventilator befindet sich im Betrieb. Der Arbeitspunkt besteht aus strömungstechnischen und motortechnischen Parametern. Die Ist-Werte der strömungstechnischen und motortechnischen Parameter sind bekannt. Es wird ein Sollwert für den strömungstechnischen Parameter vorgegeben.
B Ventilator wird mit einem konstanten Motorparameter 1 oder 2 betrieben.
C Es findet ein Abgleich bzgl. Istwert und Sollwert des strömungstechnischen Parameters mit den dazugehörigen Motorparametern statt.
D Istwert des strömungstechnischen Parameters ≠ Sollwert des strömungstechnischen Parameters (Detektion einer Änderung des Arbeitspunktes durch Veränderung der Motorparameter).
E Istwert des strömungstechnischen Parameters = Sollwert des strömungstechnischen Parameters.
F strömungstechnischer Parameter mit den zugehörigen Motorparametern überschreiten den Knickbetriebspunkt nicht.
G Ventilator wechselt den konstanten Motorparameter nicht.
H Die Differenz des Istwertes und des Sollwertes des strömungstechnischen Parameters wird ermittelt. Der Istwert des strömungstechnischen Parameters wird mittels Drehzahländerung auf den Sollwert des strömungstechnischen Parameters geregelt. Dafür wird der konstante Motorparameter 1 oder 2 entsprechend angepasst. Die dafür notwendige Drehzahländerung wird über die Ventilatorgesetze und/oder das Ventilatorkennfeld bestimmt.
I strömungstechnischer Parameter mit den zugehörigen Motorparametern überschreiten den Knickbetriebspunkt.
J Ventilator wechselt den Motorparameter von 1 nach 2 oder umgekehrt.
K Die Differenz des Istwertes und des Sollwertes des strömungstechnischen Parameters wird ermittelt. Der Istwert des strömungstechnischen Parameters wird mittels Drehzahländerung auf den Sollwert des strömungstechnischen Parameters geregelt. Dafür wird der konstante Motorparameter 1 oder 2 entsprechend angepasst. Die dafür notwendige Drehzahländerung wird über die Ventilatorgesetze und/oder das Ventilatorkennfeld bestimmt.

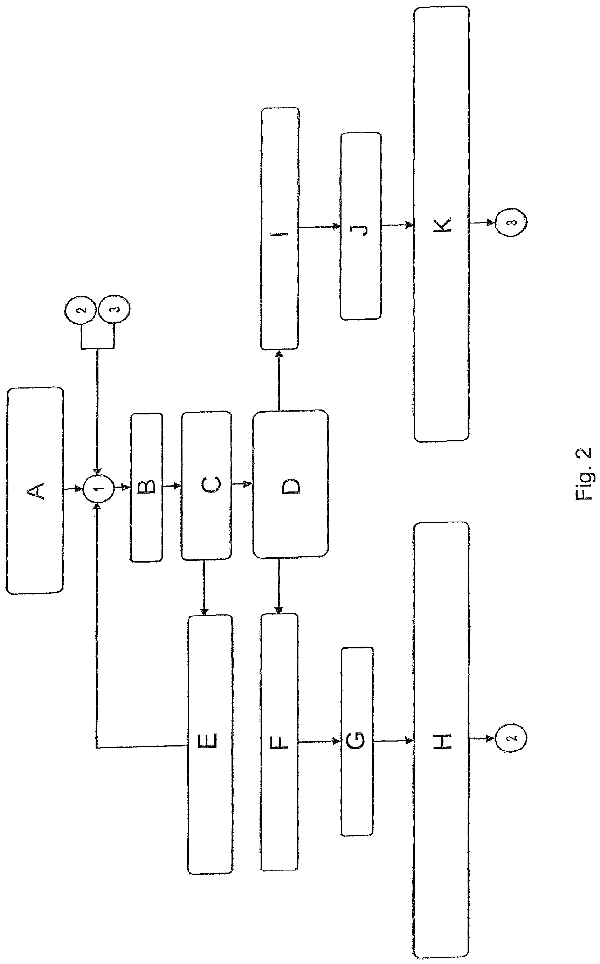

- Fig. 2: ein Flußdiagramm zur Darstellung des Prozessablaufs des Regelungsverfahrens anhand eines alternativen Ausführungsbeispiels der Erfindung mit den folgenden Schritten:
A Ventilator befindet sich im Arbeitspunkt bestehend aus Volumenstrom, Druck, Drehzahl und Leistung. Die Ist-Werte dieser Parameter sind bekannt. Es wird ein Sollwert für den Volumenstrom vorgegeben.
B Ventilator wird mit Drehzahlkonstanz oder Leistungskonstanz betrieben.
C Es findet ein Abgleich bzgl. Istwert und Sollwert des Volumenstroms mit der dazugehörigen Drehzahl und Leistung statt.
D Istwert des Volumenstroms ≠ Sollwert des Volumenstroms (Detektion einer Änderung des Arbeitspunktes, z.B. Erhöhung des Drucks, durch Veränderung der Drehzahl oder Leistung).
E Istwert Volumenstrom = Sollwert Volumenstrom.
F Volumenstrom mit der zugehörigen Drehzahl und Leistung überschreiten den Knickbetriebspunkt nicht.
G Ventilator wechselt die Drehzahlkonstanz/Leistungskonstanz nicht.
H Die Differenz des Istwertes und des Sollwertes des Volumenstroms wird ermittelt. Der Istwert des Volumenstroms wird mittels Drehzahländerung auf den Sollwert des Volumenstroms geregelt. Dafür wird die Drehzahlkonstanz/Leistungskonstanz entsprechend angepasst. Die dafür notwendige Drehzahländerung wird über die Ventilatorgesetze und/oder das Ventilatorkennfeld bestimmt.
I Volumenstrom mit der zugehörigen Drehzahl und Leistung überschreiten den Knickbetriebspunkt.
J Ventilator wechselt von der Drehzahlkonstanz in die Leistungskonstanz oder umgekehrt.
K Die Differenz des Istwertes und des Sollwertes des Volumenstroms wird ermittelt. Der Istwert des Volumenstroms wird mittels Drehzahländerung auf den Sollwert des Volumenstroms geregelt. Dafür wird die Drehzahlkonstanz/Leistungskonstanz entsprechend angepasst. Die dafür notwendige Drehzahländerung wird über die Ventilatorgesetze und/oder das Ventilatorkennfeld bestimmt.

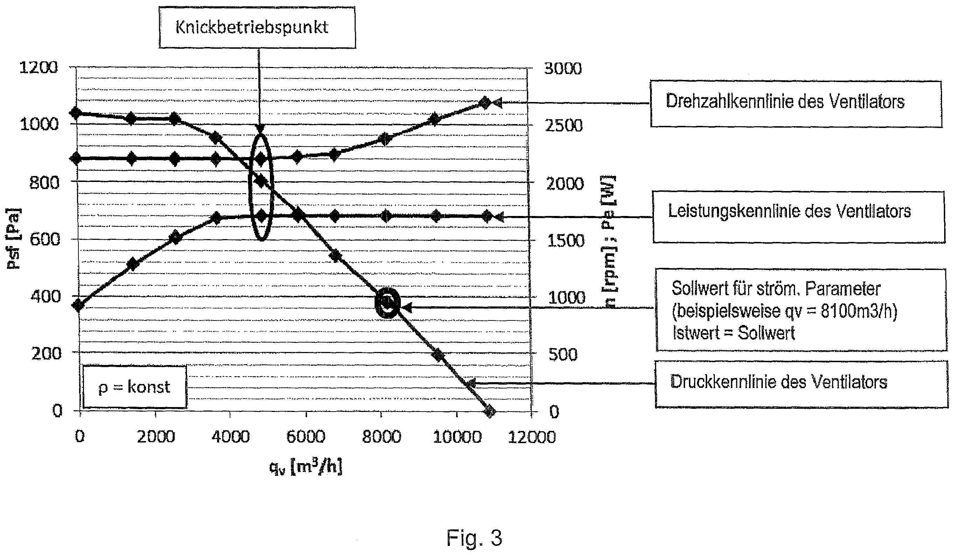

- Fig. 3 ein: Diagramm mit unterschiedlichen Kennlinien eines beispielhaften Ventilators und dem Knickbetriebspunkt, wobei der Ist-Wert des Volumenstroms gleich dem Soll-Wert ist (Der Ventilator wird bei einer konstanten Leistung betrieben);

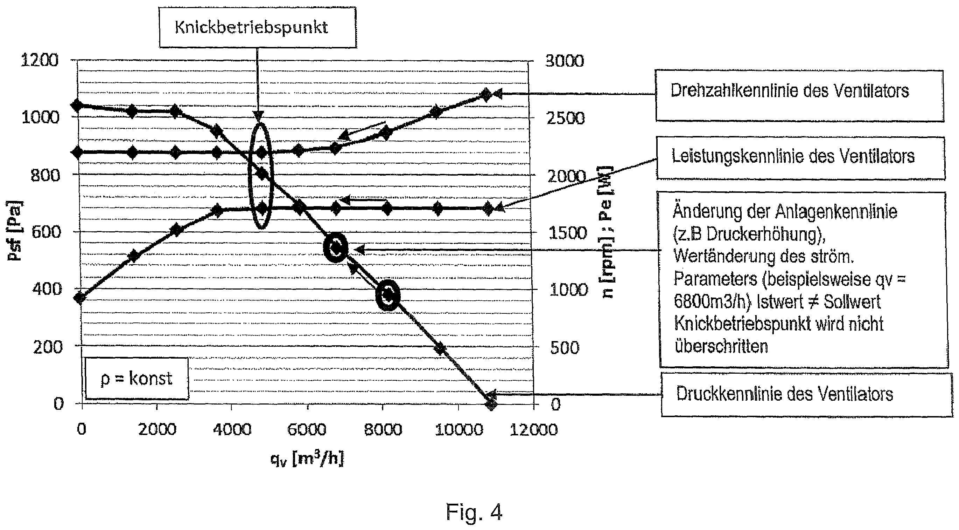

- Fig. 4 ein: Diagramm mit den unterschiedlichen Kennlinien eines beispielhaften Ventilators ähnlich zur Figur 3 und dem Knickbetriebspunkt, wobei der Ist-Wert des Volumenstroms ungleich dem Soll-Wert aufgrund einer externen Druckerhöhung ist (Der Ventilator wird bei einer konstanten Leistung betrieben, die Drehzahl verringert sich);

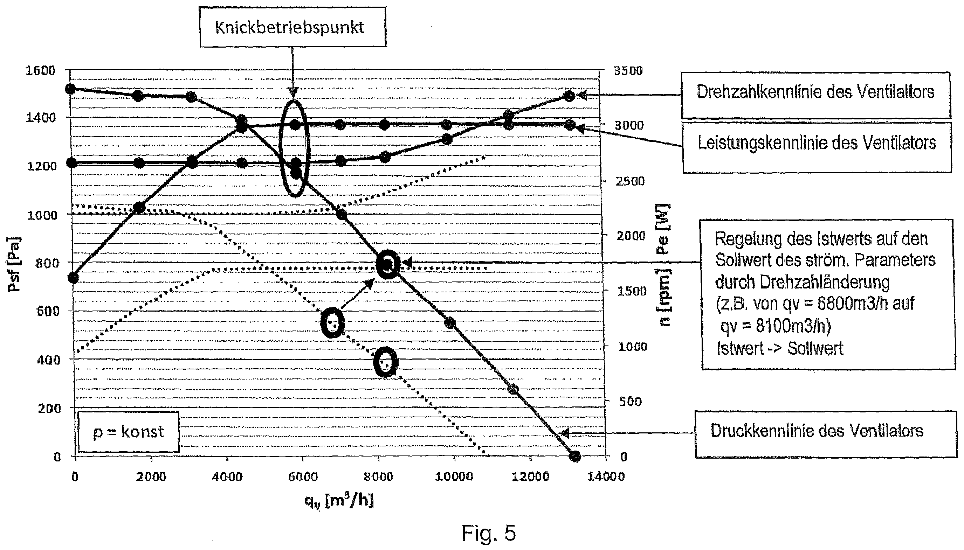

Fig. 5 ein Diagramm mit den unterschiedlichen Kennlinien eines beispielhaften Ventilators ähnlich zur Figur 4, wobei der Ist-Wert des Volumenstroms auf den Soll-Wert mittels einer Drehzahländerung geregelt wird (Der Ventilator wird bei der neuen Leistung konstant betrieben);

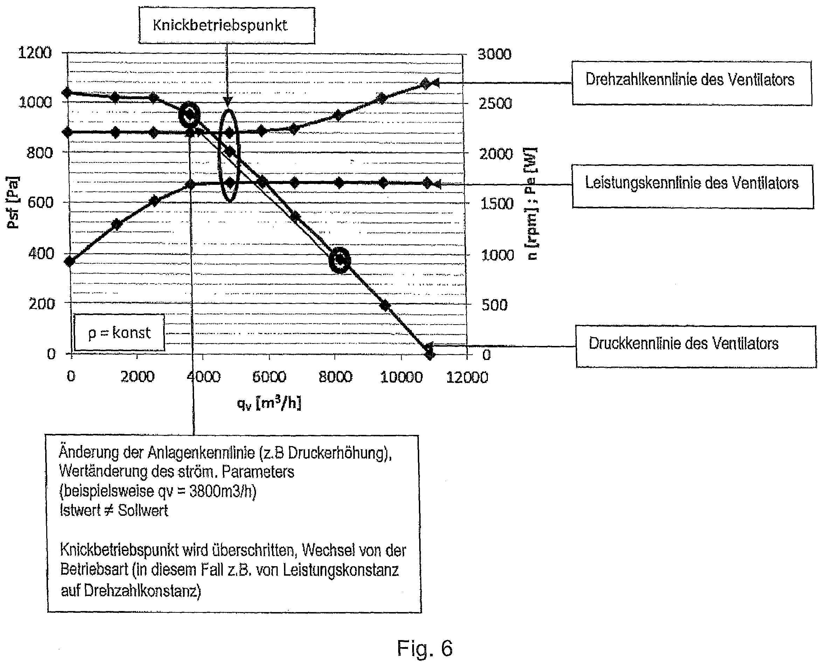

Fig. 6 ein Diagramm mit den unterschiedlichen Kennlinien eines beispielhaften Ventilators und dem Knickbetriebspunkt, wobei der Ist-Wert des Volumenstroms ungleich dem Soll-Wert aufgrund einer solchen Druckerhöhung ist, dass der Ist-Wert den Knickbetriebspunkt überschreitet. Beim Überschreiten des Knickbetriebspunkts wechselt die Betriebsart von einer konstanten Leistung auf eine konstante Drehzahl.

## Patentansprüche

1. Verfahren zur Regelung von mindestens einem strömungstechnischen Parameter P_{i,ist} auf einen vorgegebenen Sollwert P_{i,soll} durch mindestens einen Motorparameter Mi eines Ventilators in einer Anlage, wobei der Ventilator mit dem auf einen konstanten Wert geregelten mindestens einen Motorparameter Mi betrieben wird, wobei zunächst Ist-Werte des mindestens einen Motorparameters Mi erfasst und Ist-Werte von dem mindestens einen strömungstechnischen Parameter P_{i,ist} bestimmt werden und ein Vergleich der Ist-Werte und der Soll-Wert P_{i,soll} des mindestens einem strömungstechnischen Parameters P_{i,ist} durchgeführt wird, wobei bei einer Abweichung des Ist-Soll-Vergleichs des mindestens einem strömungstechnischen Parameters P_{i,ist} eine Anpassung der Drehzahl erfolgt, um den vorgegebenen Sollwert zu erreichen, **dadurch gekennzeichnet, dass**
für den Fall, dass der mindestens eine strömungstechnische Parameter P_{i,ist} einen Knickbetriebspunkt nicht überschreitet, der konstante Wert des mindestens einen Motorparameters Mi über eine Drehzahländerung so geändert wird, dass der Ist-Wert des mindestens einen strömungstechnischen Parameters P_{i,ist} auf dessen Sollwert P_{i,soll} geregelt wird, ohne dass ein Wechsel des mindestens einen Motorparameters Mi stattfindet.

2. Verfahren nach Anspruch 1, wobei nach einer Änderung des Arbeitspunktes und damit einer Änderung mindestens eines Motorparameters Mi ermittelt wird, ob sich dadurch eine Änderung des mindestens eines strömungstechnischen Parameters P_{i,ist} über den Knickbetriebspunkt hinaus ergibt.

3. Verfahren nach Anspruch 2, **dadurch gekennzeichnet, dass** für den Fall, dass der mindestens eine strömungstechnische Parameter P_{i,ist} den Knickbetriebspunkt überschreitet, der auf einen konstanten Wert geregelte mindestens eine Motorparameter Mi wechselt und der konstante Wert des mindestens einen Motorparameters Mi über eine Drehzahländerung so geändert wird, dass der Ist-Wert des mindestens einen strömungstechnischen Parameters P_{i,ist} auf dessen Sollwert P_{i,soll} geregelt wird.

4. Verfahren nach Anspruch 3, wobei die Daten zur gezielten Anpassung der Drehzahl zumindest aus Daten gewonnen werden, die aus dem gemessenen strömungstechnischen und motortechnischen Parameterkennfeld des Ventilators bestimmt werden.

5. Verfahren gemäß einem der Ansprüche 1 bis 4, **dadurch gekennzeichnet, dass** der zu regelnde wenigstens eine strömungstechnische Parameter P_{i,ist} der Volumenstrom oder der Druck ist.

6. Verfahren gemäß einem der Ansprüche 1 bis 5, **dadurch gekennzeichnet, dass** der wenigstens eine Motorparameter Mi die Leistung oder die Drehzahl oder der Strom oder das Drehmoment ist.

## Claims

1. A method for regulating at least one fluidic parameter P_{i, actual} to a predetermined target value P_{i, target} by at least one motor parameter Mᵢ of a ventilator in a system, wherein the ventilator is operated with the at least one motor parameter Mᵢ regulated to a constant value, wherein first, actual values of the at least one motor parameter Mᵢ are acquired and actual values of the at least one fluidic parameter P_{i,actual} are determined, and a comparison of the actual values and the target value P_{i,tagert} values of the at least one fluidic parameter P_{i,actual} is carried out, wherein, in the case of a deviation of the actual-target comparison of the at least one fluidic parameter P_{i,actual}, an adjustment of the rotational speed occurs, in order to reach the predetermined target value, **characterized in that**, for the case in which the at least one fluidic parameter P_{i,actual} does not exceed the inflection operating point, the constant value of the at least one motor parameter Mᵢ is changed via a rotational speed change so that the actual value of at least one fluidic parameter P_{i,actual} is regulated to its target value P_{i, target}, without a change of the at least one motor parameter Mᵢ occurring.

2. The method according claim 1, wherein, after a change of the operating point and thus a change of at least one motor parameter Mᵢ, it is determined whether this results in a change of of the at least one fluidic parameter P_{i,actual} above the inflection operating point.

3. The method according to claim 2, **characterized in that**, for the case in which the at least one fluidic parameter P_{i,actual} exceeds the inflection operating point, the at least one motor parameter Mᵢ regulated to a constant value changes, and the constant value of the at least one motor parameter Mᵢ is changed via a rotational speed change so that the actual value of the at least one fluidic parameter P_{i,actual} is regulated to its target value P_{i, target}.

4. The method according to claim 3, wherein the data for the targeted adjustment of the rotational speed is obtained at least from data which were determined from the measured fluidic and motor-related parameter characteristic diagram of the ventilator.

5. The method according to any one of claims 1 to 4, **characterized in that** the at least one fluidic parameter P_{i,actual} to be regulated is the volume flow or the pressure.

6. The method according to any one of claims 1 - 5, **characterized in that** the at least one motor parameter Mᵢ is the power or the rotational speed or the current or the torque.

## Revendications

1. Procédé permettant de réguler au moins un paramètre fluidique P_{i,ist} sur une valeur de consigne prédéfinie P_{i,soll} par au moins un paramètre de moteur Mi d'un ventilateur dans une installation, dans lequel le ventilateur fonctionne avec ledit au moins un paramètre de moteur Mi réglé sur une valeur constante, dans lequel d'abord des valeurs réelles dudit au moins un paramètre de moteur Mi sont détectées et des valeurs réelles dudit au moins un paramètre fluidique P_{i,ist} sont déterminées, et une comparaison des valeurs réelles et de la valeur de consigne P_{i,soll} dudit au moins un paramètre fluidique P_{i,ist} est effectuée, dans lequel en cas d'écart de la comparaison réel/consigne dudit au moins un paramètre fluidique P_{i,ist}, une adaptation de la vitesse de rotation est effectuée pour atteindre la valeur de consigne prédéfinie,
**caractérisé en ce qu'**au cas où ledit au moins un paramètre fluidique P_{i,ist} ne dépasse pas un point de fonctionnement d'inflexion, la valeur constante dudit au moins un paramètre de moteur Mi est modifiée par une modification de la vitesse de rotation de telle sorte que la valeur réelle dudit au moins un paramètre fluidique P_{i,ist} est réglée sur la valeur de consigne P_{i,soll} de celui-ci sans qu'aucun changement dudit au moins un paramètre de moteur Mi n'ait lieu.

2. Procédé selon la revendication 1, dans lequel on établit après une modification du point de travail, et donc une modification d'au moins un paramètre de moteur Mi, s'il en résulte une modification dudit au moins un paramètre fluidique P_{i,ist} au-delà du point de fonctionnement d'inflexion.

3. Procédé selon la revendication 2, **caractérisé en ce qu'**au cas où ledit au moins un paramètre fluidique P_{i,ist} dépasse le point de fonctionnement d'inflexion, le paramètre de moteur Mi réglé sur une valeur constante change et la valeur constante dudit au moins un paramètre de moteur Mi est modifiée par une modification de la vitesse de rotation de telle sorte que la valeur réelle dudit au moins un paramètre fluidique P_{i,ist} est réglée sur la valeur de consigne P_{i,soll} de celui-ci.

4. Procédé selon la revendication 3, dans lequel les données sont obtenues pour une adaptation ciblée de la vitesse de rotation au moins à partir de données qui sont déterminées à partir du diagramme caractéristique mesuré des paramètres fluidiques et de technique du moteur du ventilateur.

5. Procédé selon l'une quelconque des revendications 1 à 4, **caractérisé en ce que** ledit au moins un paramètre fluidique P_{i,ist} à régler est le débit volumique ou la pression.

6. Procédé selon l'une quelconque des revendications 1 à 5, **caractérisé en ce que** ledit au moins un paramètre de moteur Mi est la puissance ou la vitesse de rotation ou le courant ou le couple.
